Europäisches Patentamt

**European Patent Office**

Office européen des brevets

(11) Numéro de publication: **0 316 208**
**A1**

(12) **DEMANDE DE BREVET EUROPEEN**

(21) Numéro de dépôt: **88402615.4**

(22) Date de dépôt: **17.10.88**

(51) Int. Cl.⁴: **G 01 B 11/26**

(30) Priorité: **21.10.87 FR 8714558**

(43) Date de publication de la demande:
**17.05.89 Bulletin 89/20**

(84) Etats contractants désignés: **DE GB NL**

(71) Demandeur: **THOMSON-CSF**
**173, Boulevard Haussmann**
**F-75379 Paris Cédex 08 (FR)**

(72) Inventeur: **Bisard, René**
**THOMSON-CSF SCPI 19, avenue de Messine**
**F-75008 Paris (FR)**

**Legrand, Pierre**
**THOMSON-CSF SCPI 19, avenue de Messine**
**F-75008 Paris (FR)**

**Massy, Claude Pierre**
**THOMSON-CSF SCPI 19, avenue de Messine**
**F-75008 Paris (FR)**

(74) Mandataire: **Chaverneff, Vladimir et al**
**THOMSON-CSF SCPI**
**F-92045 PARIS LA DEFENSE CEDEX 67 (FR)**

(54) **Système de contrôle des déplacements angulaires d'un plateau tournant et application à un spectromètre à rayons X.**

(57) L'invention concerne un système de contrôle de la rotation d'un plateau tournant (T1) comportant un interféromètre dont les bras de mesure sont réalisés avec des trièdres en forme de coins de cubes en verre (P1, P2) fixés sur le plateau tournant (T1) et permettant pour des faibles rotations du plateau (T1) de réfléchir toujours dans la même direction la lumière qu'ils reçoivent d'une source (S2). Une lame biréfringente (LB) est placée dans l'un des bras et deux récepteurs (R1, R2) recevant par des analyseurs (A1, A2) la lumière fournie par l'interféromètre permettent de détecter des déplacements des coins de cubes (P1, P2) donc des rotations du plateau T2.

L'invention est appliquée à un spectromètre à rayons X.

FIG.5

EP 0 316 208 A1

## Description

**Système de contrôle des déplacements angulaires d'un plateau tournant et application à un spectromètre à rayons X**

L'invention concerne un système de contrôle des déplacements angulaires d'un plateau tournant à l'aide d'un interféromètre à laser et son application à un spectromètre à rayons X à deux cristaux.

Ce système est applicable à la mesure des déplacements angulaires de très faibles valeurs d'un plateau tournant et peut atteindre une précision de mesure de 1 centième de seconde d'arc.

Le développement des dispositifs semiconducteurs requérant une suite de plus en plus complexe de couches épitaxiées métalliques et isolantes, cela a généré le besoin de mesures précises des contraintes et des défauts formés au cours de la réalisation de ces structures multicouches. La sensibilité de la diffraction des rayons X aux distorsions du réseau d'une part et la capacité des rayons X à pénétrer des échantillons épais d'autre part présentent une situation unique pour l'analyse non destructive de la contrainte des couches et de la densité des défauts.

La diffraction des rayons X est couramment utilisée pour contrôler la qualité des monocristaux et des dépôts épitaxiques.

Ce contrôle nécessite l'enregistrement des profils de diffraction de Bragg pouvant avoir des largeurs à mi-maximum de quelques secondes d'arc (par exemple dans le cas de la diffraction de la radiation $K\alpha$ du cuivre sur les plans (511) d'un silicium de coupe (III), $\Delta\varphi = 5.2$ secondes d'arc)

Le développement des méthodes épitaxiques par jets moléculaires conduit à la réalisation de dépôts épitaxiques pouvant adapter leur paramètre de maille à celui du substrat à $\frac{\Delta\alpha}{\alpha} \simeq 10^{-5}$ près. Ceci correspond à environ 2 secondes d'arc d'écart angulaire entre le pic de diffraction de la raie $K\alpha_1$ du cuivre sur les plans (511) de l'arseniure de Gallium et celui d'une épitaxie ($Ga_x\ Al_{1-x}$ As) respectivement ; Les substrats utilisés ayant des diamètres de plus en plus grands, ils présentent une courbure macroscopique de plus en plus prononcée. La mesure du rayon de courbure devient alors un paramètre important pour la connaissance de la répartition des contraintes.

Les instruments pouvant contrôler des angles aussi petits avec une précision suffisante sont les spectromètres à Rayons X à deux cristaux. La rotation angulaire fine du deuxième cristal est assurée par un pousseur à déplacement continu (moteur et motoréducteur, cristal piézoélectrique, torsion mécanique) ou digital (moteur pas à pas et motoréducteur).

La mesure des rayons de courbure se fait généralement à l'aide d'un goniomètre à rayons X dont la tête goniométrique qui porte l'échantillon peut être animée d'un mouvement de translation asservi à la rotation angulaire.

Un tel type d'appareil a fait l'objet des publications suivantes :
- l'article X-RAY "characterization of stresses and defects in thin films and substrates" de G.A. Rozgonyi et D.C. Miller publié dans Thin Solid Films 31 (1976) 185
- l'article de G.A. Rozgonyi et T.J. Ciesiekla, publié dans Review Scientifics Instruments 44 (1973) 1053
- l'article de A.R. Strom publié dans Review Scientifics Instruments 46 (1975) 883
- l'article de L. van Mellaert et G.H. Schwuttke, publié dans Journal of Applied Physics 43 (1972) 687.

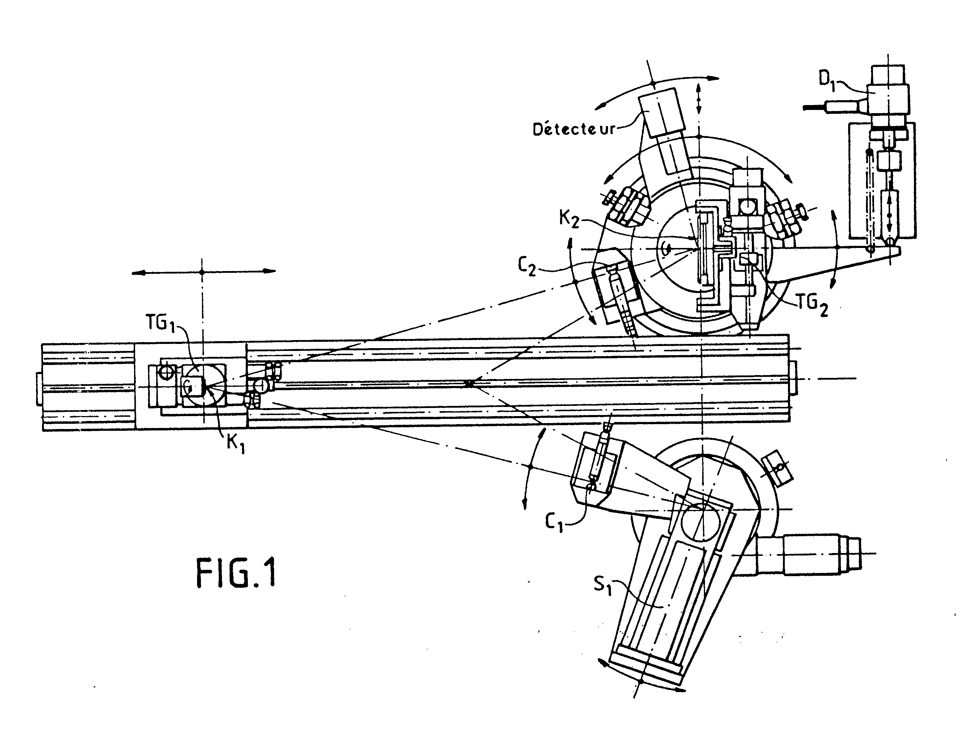

La figure 1 représente ainsi un tel appareil connu dans la technique;

Une source S1 de Rayons X est constituée par un tube scellé de foyer 0,4 x 0,8 mm². Cette source peut tourner autour d'un axe contenu dans le plan de l'anticathode par pas de 0.001 degrés.

Un dispositif à fente solidaire de la source, placé à 200 mm de celle-ci limite la divergence horizontale à mieux que 10 secondes d'arc (fente de 10 micromètres). Un collimateur C1 permet de limiter la divergence verticale à 15 minutes d'arc ou moins. Les fentes de ce collimateur C1 sont réalisées avec des couteaux en tantale massif et sont à ouverture dissymétrique. La source est fixée sur un système correcteur d'assiette à trois butées micrométriques permettant un positionnement dans l'espace avec une sensibilité angulaire de 0,5 seconde d'arc.

Un premier cristal K1 est fixé sur une première tête goniométrique TG1 qui peut se déplacer sur un banc d'optique. La translation du monochromateur plan couplée à la rotation de la source permet l'accès à des angles de Bragg compris entre zéro et 79 degrés au prix d'une perte importante du signal aux grands angles.

Le cristal à analyser K2 est placé sur une deuxième tête goniométrique TG2 à deux cercles. Une rotation de 360° est possible autour d'un axe normal à la face de l'échantillon et de ±2° autour d'un axe contenu dans la face de l'échantillon (tilt). La sensibilité angulaire sur le (tilt) est d'environ 0,3 seconde d'arc.Le porte échantillon accepte des échantillons de trois pouces de diamètre et peut se translater parallèlement à lui-même de ±30 mm par pas de 0,1 micromètre pour permettre une exploration spatiale statique, ou dynamique (mesure de rayon de courbure, topographie).

Un deuxième dispositif collimateur C2 du même type que le premier placé entre les deux cristaux K1,K2 élimine la diffusion éventuelle et $K\alpha_2$ de la radiation utilisée.

La deuxième tête goniométrique TG2 est montée sur un goniomètre de très haute précision à roulements précontraints.

Une rotation fine autour de l'axe vertical contenu dans le plan de l'échantillon permet de décrire les profils de diffraction par pas de 0,02 seconde d'arc. Le contrôle de la rotation est assurée par un dispositif de commande de déplacement ou de pousseur.

Le principe général de cet appareil a été décrit par exemple par A.H. COMPTON et S.K. ALLISON dans la publication X-rays in Theory and Experiment, 2e édition of X-rays and electrons by A. COMPTON 1926, D. VAN NOSTRAND COMPANY, Inc. New-York 1935.

Le problème est d'obtenir une rotation fine et régulière du deuxième cristal pour obtenir des mesures précises des caractéristiques de ce cristal ce que ne permet pas les dispositifs existants.

C'est pourquoi l'invention concerne un système de contrôle de déplacements angulaires d'un plateau reposant sur une table et tournant autour d'un axe perpendiculaire au plan de la table, caractérisé en ce qu'il comporte :

- une source lumineuse située sur la table et émettant un premier faisceau de lumière collimatée

- un premier dispositif semi-réfléchissant également situé sur la table recevant le premier faisceau de lumière collimatée retransmettant une partie du premier faisceau dans une première direction et réfléchissant une autre partie du faisceau dans une deuxième direction ;

- un premier trièdre réfringent fixé sur le plateau et dont la pointe est située sensiblement selon la première direction de telle façon qu'un faisceau lumineux arrivant sur le trièdre selon cette direction soit réfléchi selon la même direction vers le dispositif semi-réfléchissant ;

- un deuxième trièdre réfringent fixé sur le plateau et dont la pointe est située sensiblement selon la deuxième direction de telle façon qu'un faisceau lumineux arrivant sur le tièdre selon cette deuxième direction soit réfléchi selon la même direction vers le dispositif semi-réfléchissant ;

- une lame biréfringente placée entre le premier dispositif semi-réfléchissant et l'un des deux trièdres ;

- un deuxième dispositif semi-réfléchissant placé selon la deuxième direction du coté opposé au deuxième trièdre par rapport au premier dispositif semi-réfléchissant de façon à pouvoir recevoir la lumière provenant du premier dispositif semi-réfléchissant, retransmettant une partie de la lumière qu'il reçoit selon la deuxième direction et réfléchissant l'autre partie selon une troisième direction ;

- un premier détecteur placé selon la deuxième direction et détectant l'interférence existant entre le faisceau provenant d'un trièdre et de la lame biréfringente et correspondant à la direction ordinaire de la lame biréfringente, et le faisceau renvoyé par l'autre trièdre ;

- un deuxième détecteur détectant l'interférence existant entre le faisceau provenant d'un trièdre et de la lame biréfringente et correspondant à la direction extraordinaire de la lame biréfringente et le faisceau renvoyé par l'autre trièdre.

L'invention concerne également un système de contrôle des déplacements angulaires d'un spectromètres à rayons X comprenant une table fixe comportant une source de rayons X émettant un faisceau collimaté et un premier cristalmobile sur ladite table en translation et en rotation, caractérisé en ce qu'il comporte :

- un deuxième cristal dont on veut mesurer les caractéristiques monté sur une plate-forme mobile en rotation ;

- un plateaumobile en rotation ;

- un dispositif de couplage mécanique permettant de rendre solidaire à volonté la plate-forme et le plateau ;

- une source lumineuse située sur la table et émettant un premier faisceau de lumière collimatée ;

- un premier dispositif semi-réfléchissant également situé sur la table recevant le premier faisceau de lumière collimatée retransmettant une partie du premier faisceau dans une première direction et réfléchissant une autre partie du faisceau dans une deuxième direction ;

- un premier trièdre réfringent, fixé sur le plateau et dont la pointe est située sensiblement selon la première direction de telle façon qu'un faisceau lumineux arrivant sur le trièdre selon cette direction soit réfléchi selon la même direction vers le dispositif semi réfléchissant ;

- un deuxième trièdre réfringent fixé sur le plateau et dont la pointe est située sensiblement selon la deuxième direction de telle façon qu'un faisceau lumineux arrive sur le trièdre selon cette deuxième direction soit réfléchi selon la même direction vers le dispositif semi-réfléchissant ;

- un dispositif de détection placé selon la deuxième direction du côté opposé au deuxième trièdre par rapport au dispositif semi-réfléchissant de façon à recevoir de la lumière retransmise par le premier dispositif semi-réfléchissant et provenant du premier et du deuxième trièdre et détectant le déphasage existant entre les deux faisceaux provenant des deux trièdres.

Les différents objets et caractéristiques de l'invention apparaîtront plus clairement dans la description qui va suivre faite à titre d'exemple en se reportant aux figures annexées qui représentent :

- La figure 1, un exemple de réalisation selon l'art connu d'un spectromètre à rayons X à deux cristaux ;

- La figure 2, un exemple de réalisation d'un système de mesure de rotation d'un plateau tournant selon l'invention ;

- La figure 3, une vue simplifiée d'un exemple de réalisation d'un spectromètre selon l'invention ;

- la figure 4, un exemple de système de couplage d'un plateau interférométrique et d'une plate-forme d'observation d'un cristal d'un spectromètre à deux cristaux ;

- La figure 5, un système de mesure de rotation selon l'invention ;

- La figure 6, des diagrammes de signaux obtenus à partir du système interférométrique de la figure 5 ;

- les figures 7 et 8, des circuits de mesure et de commande du spectromètre à rayons X selon l'invention.

L'utilisation d'un interféromètre de Michelson pour mesurer la rotation d'un plateau circulaire est rendue possible selon l'invention en remplaçant les miroirs plans de l'interféromètre par des catadioptres pour éviter que la direction du faisceau réfléchi varie avec l'inclinaison des miroirs au cours de la rotation. Un trièdre se comporte vis-à- vis d'un faisceau de rayons parallèles comme un miroir passant par son sommet et perpendiculaire à la direction des rayons quelle que soit l'orientation du trièdre.

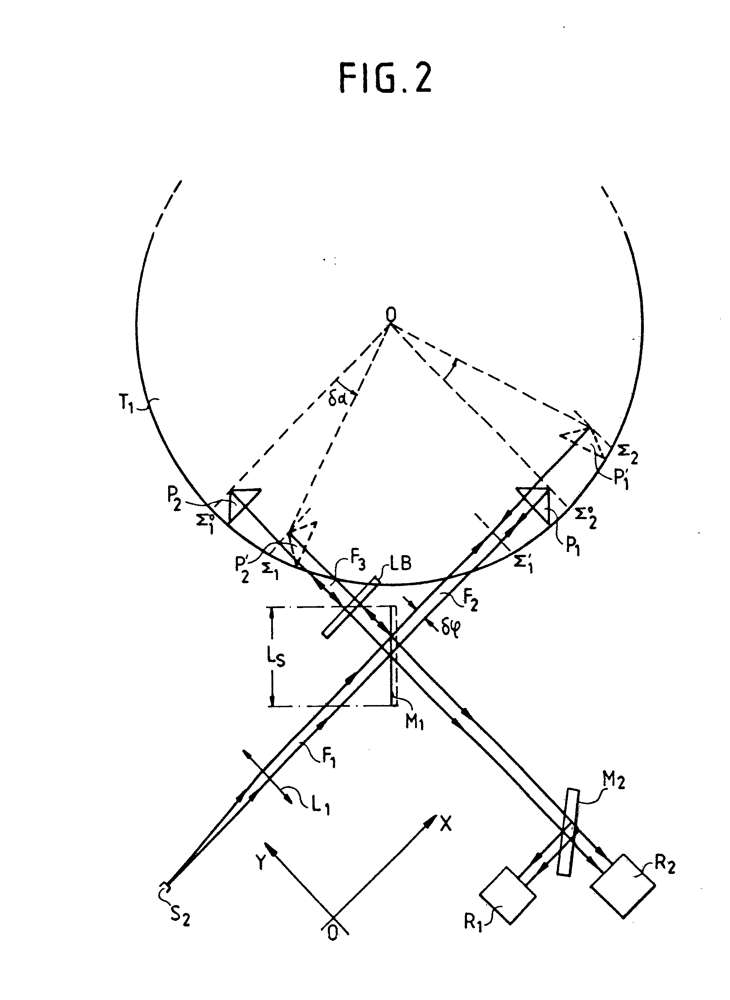

La figure 2 représente un dispositif de mesure de déplacements angulaires d'un plateau selon l'invention.

Sur la figure 2 on trouve un plateau T1 mobile en rotation autour de son centre O et placé sur une table TA, fixe représentée par les axes de références OX, OY.

La mesure des angles de rotation du plateau T1 est assurée par un interféromètre à coins de cubes.

Cet interféromètre comporte solidaire de la table TA :
- une source laser S2 qui émet un faisceau F1 de lumière collimatée par une lentille L1 selon une direction OX.
- Une lame semi-réfléchissante M1 qui sépare le faisceau F1 en deux parties. Une partie F2 du faisceau est transmise par la lame séparatrice selon une première direction (OX). Une autre partie F3 du faisceau est réfléchie par la lame séparatrice selon une deuxième direction (OY).
- Un dispositif de détection, constitué d'une deuxième lame séparatrice et de deux détecteurs R1 et R2, est placé selon la deuxième direction OY du côté opposé à la réflexion de la partie F3 du faisceau précédent.

Cet interféromètre comporte par ailleurs, solidaire du plateau T1 :
- Un premier trièdre P1 en matériau réfringent est placé avec la pointe du trièdre située selon la première direction OX du faisceau F2 de façon à réfléchir ce faisceau selon la même direction ;
- un deuxième trièdre P2 en même matériau que le trièdre P1 est placé avec la pointe du trièdre située selon la deuxième direction OY du faisceau F3 de façon à réfléchir ce faisceau selon cette même direction OY.

Les deux trièdres sont, par exemple des coins de cubes en matériau d'indice de réfraction supérieur à celui du milieu de transmission des faisceaux F2 et F3. Ce matériau est par exemple du verre ou quartz.

Enfin, une lame biréfringente LB est placée selon la deuxième direction (OY) entre la lame semi-réfléchissante M1 et l'un des deux trièdres P1 ou P2. Selon l'exemple de réalisation de la figure 2, cette lame est placée entre la lame semi-réfléchissante M1 et le deuxième trièdre P2. De plus, cette lame LB peut être soit solidaire de la table TA, soit du plateau T1. Pour qu'elle soit toujours, de façon certaine, perpendiculaire à la direction du faisceau F3, elle est solidaire, selon la figure 2, de la table TA.

La figure 2 montre la variation de la différence de marche des faisceaux lumineux et leur décalage latéral en fonction de la position du plateau T1 sur la figure 2, le plateau T1 de telle façon que le trièdre P1 vient en position P'1 et le trièdre P2, en position P'2 .Si les sommets des trièdres se déplacent d'un angle $\delta\alpha$ sur un cercle de même rayon p la différence de marche $\Delta$ s'écrit :
$$\Delta = 4\rho\sin\varphi\delta\alpha$$
L'interfrange angulaire $\alpha_i$ correspond à une variation de la différence de marche égale à $\lambda_0$ au voisinage de l'angle

$$\alpha_i = \frac{\lambda_0}{4\rho\cos\delta\alpha} \sim \frac{\lambda_0}{4\rho}$$

Pour mettre en évidence une rotation sensiblement égale à $10^{-7}$ radians il suffit d'éclairer l'interféromètre par une source laser He-Ne émettant un faisceau lumineux de longueur d'onde $\lambda_0 = 6329$ A° suffisamment brillante ($\geq 2$mW) et de placer les coins de cube à une distance d'environ 0,20 m de l'axe de rotation. Il faut alors réaliser une interpolation digitale de frange à

$$\frac{\lambda_0}{8}$$

au moins.

Le système de la figure 2, permet donc de détecter avec précision une très faible rotation d'un plateau tournant.

Ce système va être appliqué à un spectromètre à rayons X à deux cristaux du type représenté en figure 1 et dont le principe de fonctionnement a été décrit précédemment.

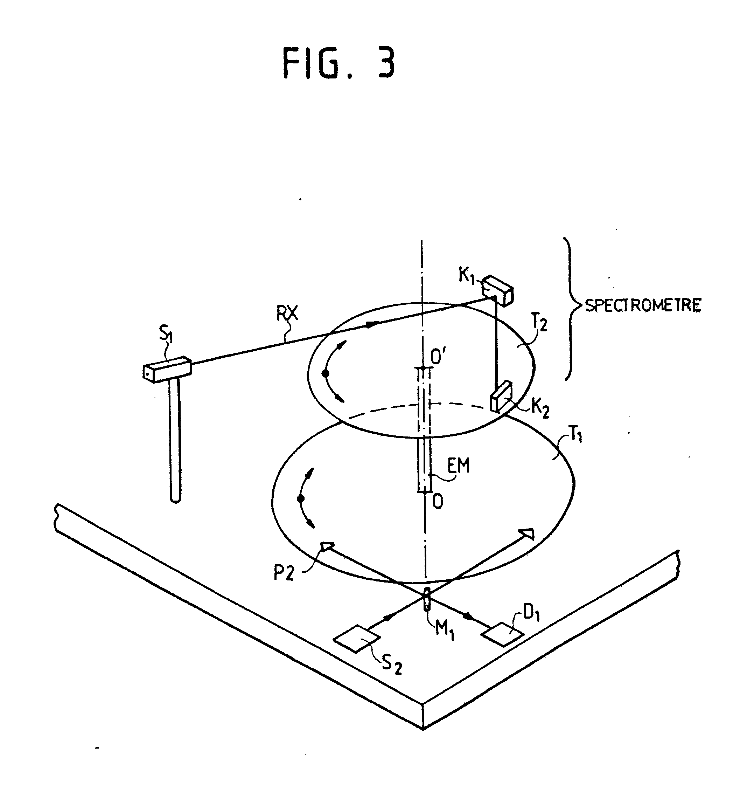

La figure 3 représente de façon simplifiée un spectromètre à rayons X selon l'invention.

Sur une table TA fixe a été prévu un plateau T1 tournant autour d'un axe 00' perpendiculaire au plan de la table TA. Sur ce plateau T1 on trouve les trièdres P1 et P2 de l'interféromètre de la figure 2, tandis que sur la table TA on trouve la source S2, la lame séparatrice M1 et un détecteur D1 regroupant la lame séparatrice M2 et les récepteurs R1, R2 de la figure 2.

Une plate-forme T2 de même axe 00' que le plateau T1 tourne également autour de l'axe 00'. Ce plateau T2 porte un spectromètre à rayons X à deux cristaux similaires à celui de la figure 1. De façon simplifiée on n'a représenté sur la figure 3, uniquement que les cristaux K1 et K2. La source S1 de rayons X du spectromètre placé sur la table fixe TA.

Un système d'embrayage EM, représenté par deux traits parallèles, permet de coupler mécaniquement la plate-forme T2 et le plateau T1 de telle façon qu'ils tournent ensembles, ou au contraire de les découpler de telle façon que la plate-forme T2 tourne indépendamment du plateau T1.

Lors d'une mesure les caractéristiques du cristal K2, dans une première étape de mesure, l'embrayage EM découple la plate-forme T2 du plateau T1. La source S1 émet un rayonnement RX de rayons X vers le spectromètre SPX situé sur la plate-forme T2. Celle-ci est orientée de façon à obtenir un pic de diffraction maximum du faisceau RX par le deuxième cristal K2. Selon la nature du cristal K2 la rotation de la plate-forme T2 peut être importante.

On approche ainsi de façon approximative le pic de diffraction maximum du cristal K2. Il convient maintenant d'une part d'affiner la précision de localisation de ce pic de diffraction et d'autre part de mesurer avec précision la largeur de ce pic de diffraction.

Selon l'invention, dans une deuxième étape de mesure, l'embrayage EM couple la plate-forme T2 au plateau T1. La rotation de la plate-forme T2 est alors mesurée avec précision par l'interféromètre mis en oeuvre à l'aide des trièdres P1, P2, de la source S2, de la lame séparatrice M et du détecteur D1. La rotation de la plate-forme T2 sera donc ainsi mesurée avec précision par cet interféromètre tel que cela a été décrit en se reportant à la figure 2. Cette mesure sera possible car les rotations angulaires qui seront à mesurer seront faibles : localisation précise d'un pic de diffraction et mesure de la largeur de ce pic de diffraction.

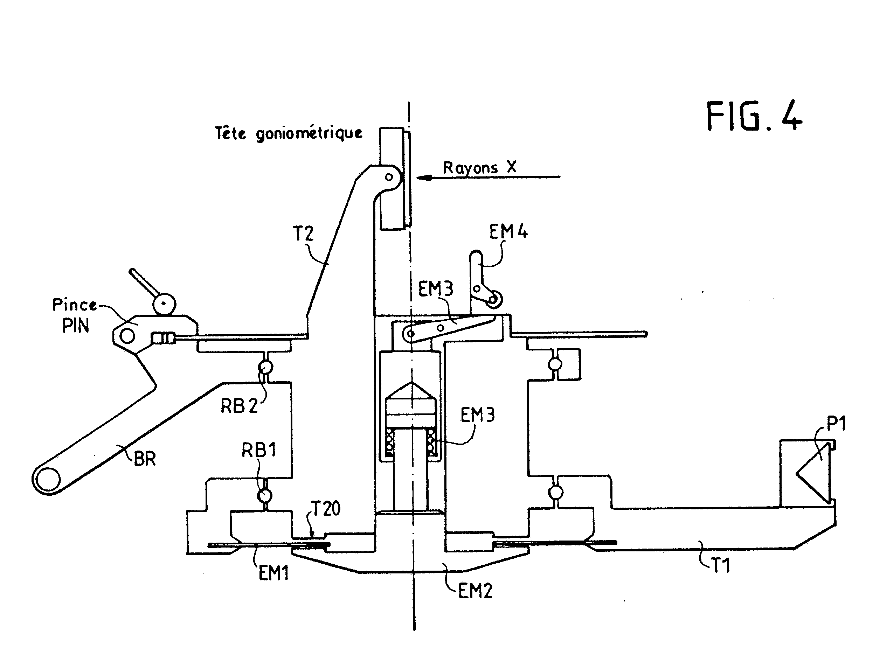

La figure 4 représente un exemple de réalisation d'un embrayage EM.

On trouve sur cette figure le plateau T1 sur lequel on n'a représenté qu'un seul trièdre P1. La plate-forme T2 est centrée sur un axe du plateau T1 par un roulement à billes RB1.

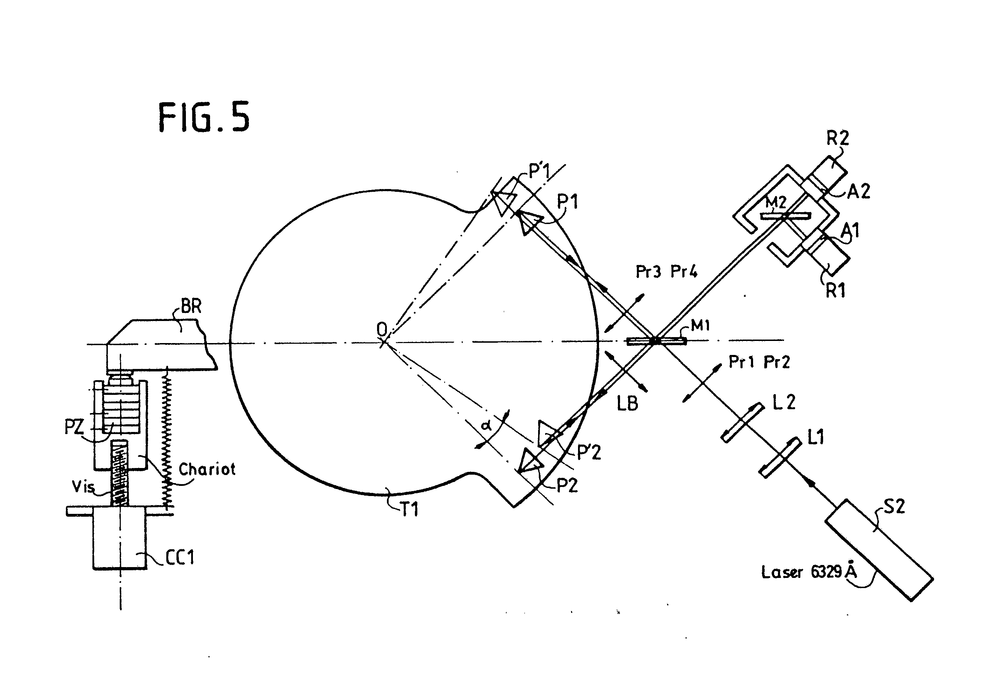

Le dispositif d'embrayage permettant de coupler la plate-forme T2 et le plateau T1 comprend un disque d'embrayage EM1 solidaire du plateau T1. Un embrayeur EM2 situé selon l'axe du disque. Un dispositif de verrouillage EM3 commandé par une manette EM4 permet de commander le coïncidement du disque EM1 entre l'embrayeur EM2 et une face T20 de la plate-forme T2. Celle-ci est alors couplée mécaniquement au plateau T1. La plate-forme T2 est couplée à un bras de commande BR par une pince PIN. Comme cela est représenté en figure 5, l'action d'un moteur CC1 et/ou d'un pousseur piézo-électrique PZ sur le bras BR permet de faire tourner la plate-forme T2.

Un ressort EM3 permet, lorsque le dispositif de verrouillage est libre (non verrouillé) de repousser l'embrayeur et de désolidariser la plate-forme T2 du plateau T1.

Le système interférométrique associé au spectromètre à rayons X permet de mesurer de faibles rotations du spectromètre. En se reportant à la figure 5, on va décrire le fonctionnement détaillé de ce système de mesure. On retrouve le plateau T1 avec les trièdres P1, P2 réalisés sous forme de coins de cube ainsi que le bras BR de commande de rotation du deuxième cristal du spectromètre. La commande du bras BR étant assurée par un moteur pas à pas et un pousseur en céramique piézo-électrique.

La mesure des angles est assurée donc par un interféromètre du type de Michelson à coins de cube. De façon plus détaillée, il est constitué d'une lame séparatrice M1, de deux coins de cube $P_1$ ET $P_2$ fixés sur un plateau T1 solidarisable de la plate-forme tournante du spectromètre à rayons X à deux cristaux par le système d'embrayage précédemment décrit.

A l'entrée de l'interféromètre, deux lames à faces parallèles $L_1$ et $L_2$ permettent de translater le faisceau laser en X et Y.

Des prismes PR1 et PR2, d'une valeur de 2 degrés ont pour but d'autocollimater sur la source laser le faisceau de retour du coin de cube P2. Ce réglage s'effectue par déviation angulaire du faisceau. Cette déviation est obtenue par la rotation des prismes autour de leurs axes parallèles au faisceau. Une lentille 13 permet d'assurer la transmission d'un faisceau de rayons parallèles. Une lame biréfringente LB, nécessaire, comme cela sera décrit ultérieurement à la détection du sens de rotation du plateau T1, est placée dans le bras de mesure. Les prismes PR3 PR4 d'une valeur de 30 minutes d'arc permettent d'effectuer la coïncidence des faisceaux à la sortie de l'interféromètre. La lame séparatrice M2 reçoit les faisceaux provenant des coins de cubes P1 et P2. Après division par la lame séparatrice M2 de la lumière qu'elle reçoit, les analyseurs A1 A2 sélectionnent avant détection par les récepteurs R1, R2 deux systèmes de franges dont le déphasage relatif est défini par l'orientation de la lame biréfringente LB.

Le meilleur procédé permettant de lever l'indétermination du sens de déplacement, consiste à obtenir deux systèmes de franges correspondant à des longueurs optiques de l'interféromètre légèrement différentes, ce qui explique la présence de deux récepteurs. Le flux transmis par l'interféromètre s'écrit :

$$\emptyset_1 = \emptyset_o \cos^2 \left[ \frac{\pi}{\lambda_o} (4P \sin \delta\alpha) \right]$$

$$\emptyset_2 = \emptyset_o \cos^2 \frac{4\pi}{\lambda_o} (P \sin \delta\alpha + \Delta')$$

Lorsque la rotation s'inverse, le déphasage relatif des signaux change de signe. La valeur souhaitée de ce déphasage étant de ©/2 nous avons :

$$\frac{4\pi \Delta'}{\lambda_o} = (2k + 1) \frac{\pi}{2}$$

soit un écart de chemin optique $\Delta'$ qui a pour valeur

$$\Delta' = (2k+1) \frac{\lambda_o}{8}$$

avec k entier.

On trouve ces deux chemins optique différents dans l'interféromètre, suivant deux directions de polarisation orthogonales de la lumière en interposant une lame biréfringente

$$\frac{\lambda_o}{8}$$

dans un des bras de l'interféromètre.

Ces deux chemins optiques différents correspondent alors à la propagation de l'onde suivant les directions ordinaires et extraordinaires de la lame biréfringente. Le déphasage est de ©/2 lorsque les lignes neutres de la lame sont orientées à 45° de la polarisation du laser. La puissance des faisceaux dans chaque polarisation est alors sensiblement égale.

Le déplacement et le positionnement angulaire de la plate-forme T2 et donc du plateau T1 sont assurés par un ensemble composé d'un pousseur piezo-électrique monté en série avec un système vis écrou entraîné par un moteur pas à pas CC1. Les possibilités de déplacement du pousseur sont de ± 10 micromètres pour ± 1000 V de tension appliquée.

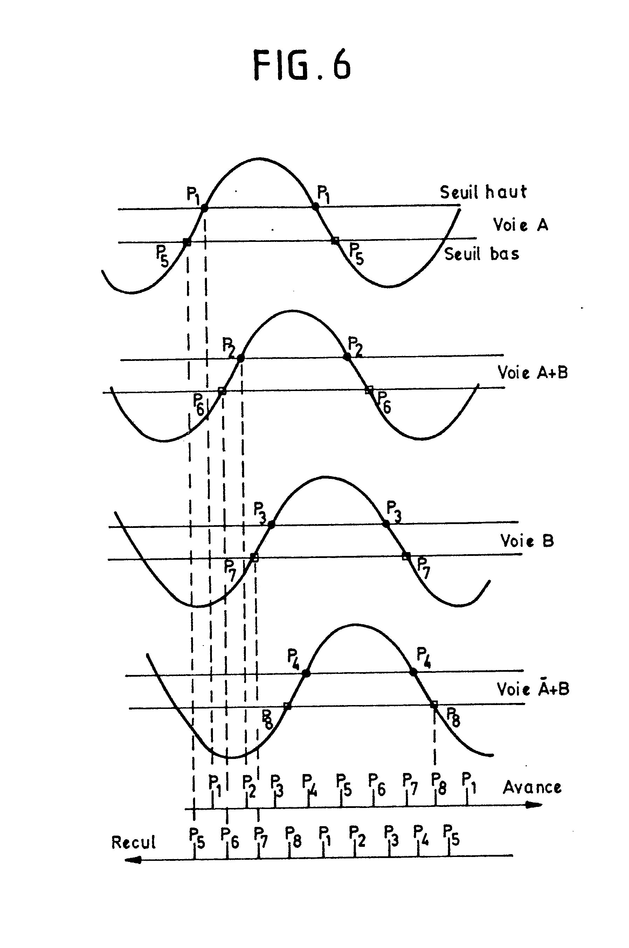

La commande de rotation par moteur électrique présente des imprécisions dues aux imperfections mécaniques (causées par exemple par les variations de températures). Notamment, on n'est pas sûr, même si la commande fonctionne bien, que la poussée mécanique est la même en raison de dilatations différentielles. C'est pourquoi le pousseur PZ est commandé par une chaîne d'asservissement permettant de corriger les écarts de positionnement dus à la mécanique. La détection de la position angulaire est effectuée par l'interféromètre de Michelson. Cette mesure assure une résolution de 0,01 seconde d'arc. La mesure est faite par les deux récepteurs $R_1$ et $R_2$ qui convertissent les franges en deux signaux analogiques A et B déphasés de ©/2 que l'on trouve sur la figure 6 (voies A et B). Ces signaux sont amplifiés pour être portés à un niveau de quelques volts puis inversés, on obtient $\overline{A}$ et $\overline{B}$. Un additionneur-inverseur analogique permet d'obtenir les systèmes de franges intermédiaires A + B et $\overline{A}$ + B. La figure 6 représente la répartition de ces différents signaux. L'interpolation digitale des franges d'interférence consiste à repérer uniquement sur chaque frange le passage à chaque point d'inflexion. Ce repérage partage la période d'un signal en deux parties, et, combiné sur quatre système de franges, déphasées de ©/4 permet d'obtenir huit parties égales sur une demi période (analogique interférométrique)

Pratiquement, des comparateurs transforment les signaux analogiques des quatre voies A, A + B, B, $\overline{A}$ + B en créneaux. Les deux seuils de basculement de chaque comparateur sont placés autour de la valeur moyenne du signal (fig 6).
Les créneaux venant des comparateurs sont ensuite transformés en impulsions par des différentiateurs. Ils sont représentés sur les lignes "avance" et "recul" de la figure 6. Ce repérage partage donc la période d'un signal en seize parties égale en prenant un des signaux comme référence et suivant le sens de marche, le déphasage relatif des signaux est soit en avance, soit en retard. Ceci permet après détection de créer des impulsions de comptage et de décomptage (logique interférométrique). Cette transformation en impulsions de comptage et de décomptage est décrite dans le document de COOK H.D and MARZETTA L.A., 1961, Journal research Nat. Bur. Stand. Seet. C65, 129.

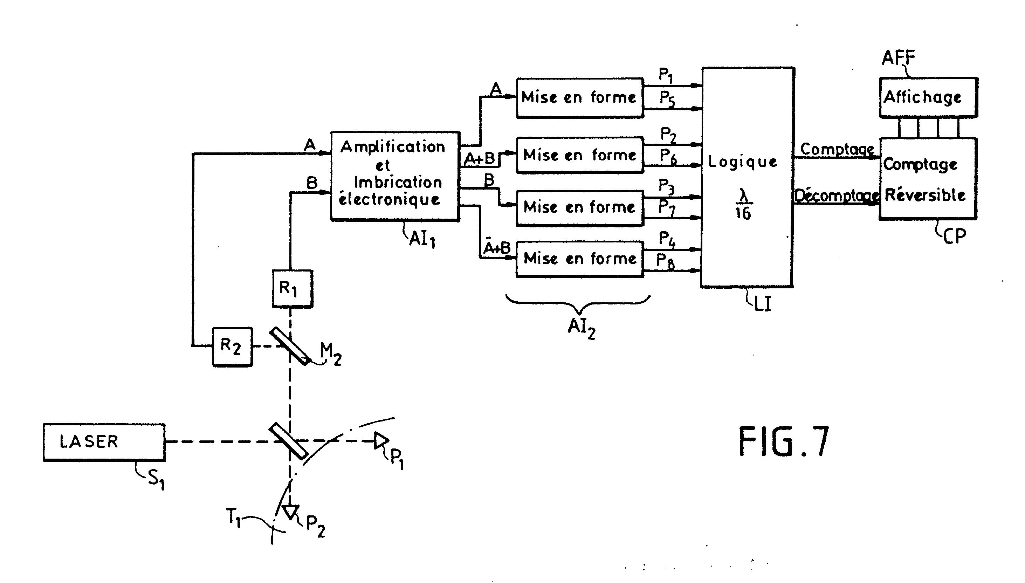

La figure 7, représente des exemples de circuits permettant de réaliser des mesures de rotation. Sur cette figure on retrouve l'interféromètre avec la source S1, les trièdres P1, P2, les lames séparatrices M1, M2 et les récepteurs R1, R2. Un circuit Al1 élabore à partir des signaux A et B, les signaux A + B et $\overline{A}$ + B. Les circuits Al2 mettent en forme les signaux A, B, A + B et $\overline{A}$ + B. Un circuit logique LI fournit à partir de ces signaux des signaux de comptage qui sont transmis à un compteur - décompteur CP dont le contenu est affiché sur un dispositif d'affichage ce qui permet de connaître la rotation mesurée.

Ces signaux de comptage et de décomptage sont exploités pour permettre la correction de la rotation commandée par les cristaux piézo-électriques ou le moteur CC1.

Enfin comme on l'a vu précédemment la commande de rotation fournie par le moteur n'est pas suffisamment précise. Le système interférométrique a donc réalisé la mesure de la rotation qui a été effectuée. Il convient donc de comparer la valeur de la rotation commandée et la valeur réelle de la rotation réalisée, et, en fonction de la différence, de corriger cette rotation à l'aide du pousseur piézo-électrique PZ.

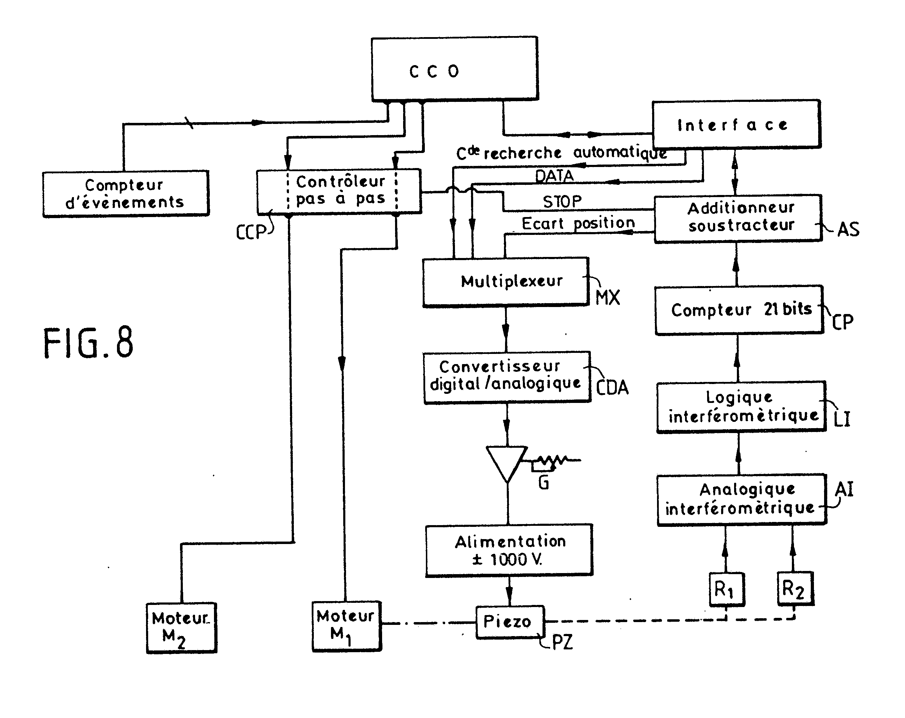

Les circuits représentés en figure 8 permettent de détecter cette différence de rotation et de commander la rotation à l'aide du pousseur.

Les récepteurs R1, R2 transmettent donc les signaux détectés à des circuits analogiques de l'interféromètre AI qui élaborent les signaux A, B, A + B, $\overline{A}$ + B. A partir de ces signaux, des circuits logiques de l'interféromètre LI élaborent des signaux de comptage et de décomptage comme cela a été décrit précédemment. Ces signaux de comptage/décomptage sont envoyés à un compteur-décompteur CP de capacité 21 bits.

La sortie du compteur est couplée à un additionneur soustracteur AS qui fait la différence entre le contenu du compteur et une consigne de position envoyée par un circuit de commande central CCO.

En effet, le moteur CC1 étant placé sous la commande du circuit de commande central CCO par l'intermédiaire d'un circuit contrôleur d'avancement pas à pas CCP, le circuit de commande central CCO connaît la position du moteur CC1. Cette position communiquée à l'additionneur-soustracteur permet à celui-ci de calculer la différence entre la position du moteur et la déviation angulaire mesurée.

La différence est appelée écart de position. La capacité de l'additionneur-soustracteur est de 10 bits soit 1024 points d'écart. Un convertisseur digital analogique CDA de 10 bits convertit l'écart en un signal de ± 10 volts qui est envoyé à la commande de l'alimentation de ± 1000 volts du pousseur piézo-électrique. Le déplacement minimum du pousseur sera ±0,02 micromètre soit environ 0,01 seconde d'arc.

Un multiplexeur MX est inséré entre l'additionneursoustracteur et le convertisseur afin d'ouvrir la boucle pour la recherche d'un pic de diffraction pendant la période d'initialisation du système. Cette recherche de pic se fait par une incrémentation directe du convertisseur CDA par le circuit de commande central CCO.

On voit donc que le système interférométrique lié au plateau T1 permet de mesurer une rotation très fine de la plate-forme T2 du spectromètre.

De plus à l'aide des circuits exploitant les signaux de l'interféromètre, le système de l'invention permet une rotation angulaire contrôlée avec précision de la plate-forme T2.

Le système de commande de rotation de la plate-forme T2 à l'aide d'un moteur électrique et du cristal piézo-électrique a été décrit en relation avec un spectromètre à rayons X. Cependant ce système de commande est applicable à tout autre type de commande de rotation. Notamment, il est applicable à une commande de rotation d'un organe tournant tel qu'un plateau T1 sans relation avec un autre organe tournant (tel que la plate-forme T2).

Il est bien évident que la description qui précède n'a été faite qu'à titre d'exemple non limitatif. D'autres variantes peuvent être envisagées sans sortir du cadre de l'invention. Les exemples numériques n'ont été fournis que pour illustrer la description.

**Revendications**

1. Système de contrôle de déplacements angulaires d'un plateau (T1) reposant sur une table (TA) et tournant autour d'un axe (OO') perpendiculaire au plan de la table, caractérisé en ce qu'il comporte :
- une source lumineuse (S2) située sur la table (RA) et émettant un premier faisceau de lumière collimatée
- un premier dispositif semi-réfléchissant(M1) également situé sur la table (TA) recevant le premier faisceau de lumière collimatée, retransmettant une partie du premier faisceau dans une première direction (OX) et réfléchissant une autre partie du faisceau dans une deuxième direction (OY) ;
- un premier trièdre réfringent(P1) fixé sur le plateau (T1) et dont la pointe est située sensiblement selon la première direction de telle façon qu'un faisceau lumineux arrivant sur le trièdre selon cette direction soit réfléchi selon la même direction vers le dispositif semi-réfléchissant (M1) ;
- un deuxième trièdre(P2) réfringent fixé sur le plateau (T1) et dont la pointe est située sensiblement selon la deuxième direction de telle façon qu'un faisceau lumineux arrivant sur le trièdre selon cette deuxième direction soit réfléchi selon la même direction vers le dispositif semi-réfléchissant(M1) ;
- une lame biréfringente (LB) placée entre le premier dispositif semi-réfléchissant et l'un des deux trièdres(P1 ou P2) ;
- un deuxième dispositif semi-réfléchissant(M2) placé selon la deuxième direction du côté opposé au deuxième trièdre(P2) par rapport au premier dispositif semi-réfléchissant(M1) de façon à pouvoir recevoir la lumière provenant du premier dispositif semi-réfléchissant(M1), retransmettant une partie de la lumière qu'il reçoit selon la deuxième direction et réfléchissant l'autre partie selon une troisième direction ;
- un premier détecteur placé selon la deuxième direction et détectant l'interférence existant entre le faisceau provenant d'un trièdre et de la lame biréfringente (LB) et correspondant à la direction ordinaire de la lame biréfringente, et le faisceau renvoyé par l'autre trièdre ;
- un deuxième détecteur placé selon la troisième direction et détectant l'interférence existant entre le faisceau provenant d'un trièdre et de la lame biréfringente (LB) et correspondant à la direction extraordinaire de la lame biréfringente, et le faisceau renvoyé par l'autre trièdre.

2. Système de contrôle de déplacements angulaires d'un plateau (T1) selon la revendication 1, caractérisé en ce qu'il comporte :
- un premier analyseur (A1) orienté selon une direction déterminée et associé au premier détecteur
- un deuxième analyseur (A2) orienté selon une direction perpendiculaire à la direction du premier analyseur et associé au deuxième détecteur.

3. Système de contrôle de déplacements angulaires d'un plateau (T1) selon la revendication 1, caractérisé en ce qu'il comporte un dispositif de commande commandant les déplacements angulaires du plateau ;
- un circuit analogique (AI) recevant les signaux de détection (A et B) desdits détecteurs (R1, R2) et fournissant en échanges lesdits signaux (A et B, $\overline{A}$ et $\overline{B}$) ainsi que leurs sommes (A + B) et ($\overline{A}$ + B)
- un circuit logique (LI) détectant les transitions montantes et descendantes de ces dits signaux et fournissant un nombre d'impulsions de comptage permettant de déterminer la position angulaire du plateau (T1).

4. Système de contrôle des déplacements angulaires d'un spectromètres à rayons X comprenant une table fixe TA comportant une source (1) de rayons X émettant un faisceau collimaté et un premier cristal (K1) mobile sur ladite table en translation et en rotation, caractérisé en ce qu'il comporte :
- un deuxième cristal (K2) dont on veut mesurer les caractéristiques monté sur une plate-forme (T2) mobile en rotation ;
- un plateau (T1) mobile en rotation ;
- un dispositif de couplage mécanique (EM) permettant de rendre solidaire à volonté la plate-forme (T2) et le plateau (T1) ;

- une source lumineuse située sur la table (S2) et émettant un premier faisceau de lumière collimatée ;
- un premier dispositif semi-réfléchissant(M1) également situé sur la table (TA) recevant le premier faisceau de lumière collimatée retransmettant une partie du premier faisceau dans une première direction et réfléchissant une autre partie du faisceau dans une deuxième direction ;
- un premier trièdre réfringent (P1), fixé sur le plateau (T1) et dont la pointe est située sensiblement selon la première direction de telle façon qu'un faisceau lumineux arrivant sur le trièdre selon cette direction soit réfléchi selon la même direction vers le dispositif semi-réfléchissant ;
- un deuxième trièdre réfringent fixé sur le plateau (T1) et dont la pointe est située sensiblement selon la deuxième direction de telle façon qu'un faisceau lumineux arrive sur le trièdre selon cette deuxième direction soit réfléchi selon la même direction vers le dispositif semi-réfléchissant ;
- un dispositif de détection placé selon la deuxième direction du côté opposé au deuxième trièdre (P2) par rapport au dispositif semi-réfléchissant(M1) de façon à recevoir de la lumière retransmise par le premier dispositif semi-réfléchissant (M1) et provenant du premier et du deuxième trièdre (P1, P2) et détectant le déphasage existant entre les deux faisceaux provenant des deux trièdres.

5. Système de contrôle des déplacements angulaires d'un spectromètre selon la revendication 4, caractérisé en ce qu'il comporte :
- un dispositif biréfringent (LB) situé entre le premier dispositif semi-réfléchissant (M1) et l'un des deux trièdres (P1, P2) ;
et en ce que le dispositif de détection comporte :
- un deuxième dispositif semi-réfléchissant (M2) placé selon la deuxième direction du côté opposé au deuxième trièdre (P2) par rapport au premier dispositif semi-réfléchissant (M1) de façon à pouvoir recevoir la lumière provenant du premier dispositif semi-réfléchissant (M1), retransmettant une partie de la lumière qu'il reçoit selon la deuxième direction et réfléchissant l'autre partie selon une troisième direction ;
- un premier détecteur (R1) placé selon la deuxième direction et détectant l'interférence existant entre le faisceau provenant d'un trièdre et de la lame biréfringente et correspondant à la direction ordinaire de la lame biréfringente, et le faisceau renvoyé par l'autre trièdre ;
- un deuxième détecteur (R2) placé selon la troisième direction et détectant l'interférence existant entre le faisceau provenant d'un trièdre et de la lame biréfringente (LB) et correspondant à la direction extraordinaire de la lame biréfringente, et le faisceau renvoyé par l'autre trièdre.

6. Système de contrôle de déplacements angulaires du spectromètre selon la revendication 5, caractérisé en ce qu'il comporte :
- un premier analyseur orienté selon une direction déterminée et associé au premier détecteur ;
- un deuxième analyseur orienté selon une direction perpendiculaire à la direction du premier analyseur et associé au deuxième détecteur.

7. Système de contrôle de déplacements angulaires d'un spectromètre selon la revendication 5, caractérisé en ce qu'il comporte un dispositif de commande commandant les déplacements angulaires du plateau ;
- un circuit analogique (AI) recevant les signaux de détection (A et B) desdits détecteurs (R1, R2) et fournissant en échanges lesdits signaux (A et B) ainsi que leur somme (A + B) et leur différence (A + B) ;
- un circuit logique (LI) détectant les transitions montantes et descendantes de ces dits signaux et fournissant un nombre d'impulsions de comptage permettant de déterminer la position angulaire du plateau (T1).

8. Système de contrôle de déplacements angulaires d'un interféromètre selon la revendication 7, caractérisé en ce qu'il comporte :
- un moteur (M1) de commande de rotation fonctionnant lorsque l'embrayage (EM) découple le plateau (T1) de la plate-forme (T2) commandant la rotation de la plate-forme (T2) sous la commande d'une unité centrale de commande (CCO) ;
- un cristal piézo-électrique fonctionnant lorsque l'embrayage (EM) couple mécaniquement le plateau (T1) à la plate-forme (T2) et commandant la rotation de la plate-forme (T2) et du plateau (T1) sous la commande des impulsions de comptage du circuit logique (LI).

9. Système de contrôle de déplacements angulaires d'un interféromètre selon la revendication 8, caractérisé en ce qu'il comporte :
- un circuit additionneur-soustracteur (AS) recevant une indication de nombre d'impulsions de comptage du circuit logique (LI) ainsi qu'une indication de position angulaire du moteur (M1) fournie par l'unité centrale de commande CCO, comparant ces indications et fournissant une indication de comparaison ;
- un circuit convertisseur digital-analogique CDA recevant cette indication de comparaison et fournissant au cristal piézo-électrique un signal de tension correspondant à cette indication de comparaison.

FIG.1

EP 0 316 208 A1

# FIG.2

# FIG. 3

FIG. 4

Tête goniométrique

Rayons X

T2

EM4

Pince
PIN

EM3

RB2

EM3

BR

RB1

P1

T20

EM1

EM2

T1

EP 0 316 208 A1

FIG.5

EP 0 316 208 A1

# FIG.6

FIG.7

FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| A | FR-A-2 496 872 (SOCIETE D'OPTIQUE PRECISION ELECTRONIQUE & MECHANIQUE) * page 2, ligne 19 - page 3, ligne 32; figure 1 * | 1, 2, 5, 6 | G 01 B 11/26 |
| A | NUCLEAR INSTRUMENTS AND METHODS vol. 154, no. 1, août 1978, pages 95 - 104, Fribourg, CH; W. SCHWITZ: "Precision of curved crystal spectrometers.1. Large angle laser interferometer" * page 95, ligne 1 - page 97, colonne de droite, ligne 2; figures 2, 3 * | 1, 2 | |
| A | DE-A-3 419 024 (DAIMLER-BENZ AG) * résumé, page 6, ligne 5 - page 8, ligne 20; figure 1 * | 1 | |
| A | US-A-3 926 523 (CHAPMAN) * résumé; colonne 2, ligne 61 - colonne 4, ligne 36; figure 1 * | 1 | |

DOMAINES TECHNIQUES RECHERCHES (Int. Cl.3)

G 01 B 11/00
G 01 M 11/00
G 01 B 9/00
G 01 J 9/00
G 01 N 23/00

Le présent rapport a été établi pour toutes les revendications

| Lieu de la recherche | Date d'achèvement de la recherche | Examinateur |
|---|---|---|
| BERLIN | 16-01-1989 | WEIHS J.A. |